# EUROPEAN PATENT APPLICATION

(11) **EP 1 614 497 A1**
(43) Date of publication of application: **11.01.2006**
(21) Application number: 05015008.5
(22) Date of filing: 11.07.2005
(51) Int. Cl.: B23K 26/34

(54) **Method and apparatus for repairing or building up surfaces on a workpiece while the workpiece is mounted on a machine tool**

(30) Priority: 09.07.2004 US 586823 P
(71) Applicant: Ingersoll Machine Tools, Inc., Rockford IL 61103 (US)
(72) Inventor: Oldani, Tino, Rockford, Illinois 61108 (US)
(74) Representative: Hoeger, Stellrecht & Partner Patentanwälte

(57) **Abstract**

A method and apparatus are provided for adding material to a workpiece (26) mounted on a machine tool (14), while the workpiece is mounted on a machine tool, by melting a portion of the workpiece, in a zone of addition of the workpiece, using a material addition device (12) including a laser (36), to form a puddle of molten material of the workpiece in the zone of addition, and feeding the material to be added into the puddle of molten material while continually applying heat with the laser. The melting and feeding are performed while the workpiece remains mounted in the same set-up that is used for machining the workpiece on the machine tool, except for replacing machining cutters used during machining operations with the material addition device. The machine tool may be a lathe, a grinder, a milling machine, a jig bore, or any other type of machine tool.

## Description

### CROSS REFERENCE TO RELATED PATENT APPLICATIONS

This patent application claims benefit of U.S. provisional patent application 60/586,823, filed on July 9, 2004, the entire disclosure of which is incorporated herein by reference.

### FIELD OF THE INVENTION

This invention relates generally to fabrication and/or repair of workpieces by processes involving machining operations performed on the workpiece while it is attached to a standard table of a machine tool, and more particularly to fabrication and/or repair of workpieces wherein a surface of a workpiece must be built-up, during a fabrication or repair sequence, by heating an area of the substrate to form a molten puddle and melting additional material into the puddle, to form a built-up portion of the workpiece which is subsequently machined with the workpiece mounted on the table of a machine tool.

### BACKGROUND OF THE INVENTION

There are many instances where it is necessary to repair or build up a surface of a workpiece, as a part of a sequence of machining operations, in a manner that results in the built-up area having high structural properties. These instances include: repairing machining mistakes; replacing worn surfaces; creating wear surfaces on the leading edges of turbine blades and propellers and similar parts; filling porosities in castings and weldments; and joining parts of identical or dissimilar materials.

For such instances, in structures made from metals, and in some non-metals such as thermoplastics, it is typically necessary to form a molten puddle on the surface of the workpiece, melt additional material into the molten puddle, and then cool the molten puddle, in order to achieve a built-up area having sufficiently high structural properties for the intended purpose of the structure which is ultimately produced after subsequent machining of the built up workpiece.

In the past, processes such as arc welding, stir-friction welding, and acetylene torch heating were often required to achieve the desired results in metal parts. In plastic parts, heating was accomplished by methods including application of traditional radiant heating, ultrasonic energy, or by friction welding.

Processes such as arc welding or torch heating, for example, cannot readily be accomplished while the workpiece is mounted on the table of a machine tool, without fear of damage to the workpiece, the table and/or machine tool from the electrical currents or fields, high temperatures, or massive amounts of heat generated by such prior approaches. With other prior approaches, such as stir friction welding of metals, or friction welding of thermoplastics, the equipment required to accomplish these processes is typically too large, or otherwise not amenable to performing the material addition process while the workpiece is mounted on a machine tool of the type used for subsequent machining of the workpiece. It has previously been necessary, therefore, to have the workpiece removed from the table of the machine tool during the process of building up the surface of the workpiece.

The necessity of having the workpiece separated from the table of the machine tool during build up of the surface is especially bothersome in the case of a repair to a workpiece necessitated by a mistake during a machining operation, where too much material has been erroneously removed, where a hole has been drilled in a wrong location, or where a bore has been made too large, for example. In such circumstances, it has been necessary to tear down a machining setup, build up the workpiece to the point that it could be-salvaged, and then reinstall the workpiece on the table of the machine tool, prior to proceeding with machining the workpiece to its finished shape.

Whenever a workpiece is removed from a machine tool, it is typically also necessary to once again "indicate in" the workpiece after it is reinstalled on the machine tool, thereby adding further wasted time and effort to the process of effecting the repair.

During repair of machining errors and replacement of worn surfaces of a workpiece, it is typically also necessary to scan, measure, or otherwise indicate in, a part prior to initiating repair or building up a surface, in order to know how much material needs to be added and at what points on the workpiece that material needs to be added. Such scanning and measurement may require additional set up and working time.

In operations such as creating wear surfaces, on turbine blades and propellers, for example, it may also be necessary to perform machining operations on the workpiece prior to adding material, in order to prepare the workpiece in a manner ensuring that the built up area of the workpiece will have a proper shape for subsequent machining operations to bring the workpiece to its final shape. In the past, it has been necessary to remove the workpiece form the machine tool, after such pre-build-up machining operations, so that the surface of the workpiece could be built up with previously available methods and apparatuses.

It is desirable, therefore, to provide a method and an apparatus for performing machining operations involving the addition of material to molten puddle formed in the surface of a workpiece, which do not require that the workpiece be removed from the machine tool during the operation of building up the surface of the workpiece.

### BRIEF SUMMARY OF THE INVENTION

The invention provides a method and apparatus for adding material to a workpiece, while the workpiece is mounted on a machine tool, by melting a portion of the workpiece, in a zone of addition of the workpiece, to form a puddle of molten material of the workpiece in the zone of addition, and feeding the material to be added into the puddle of molten material while continually applying heat to the zone of addition.

In one form of the invention, a material addition device is mounted on a machine tool concurrently with the workpiece. The material addition device may be operatively attached to a tool holding element of the machine tool. Where the machine tool includes a movable tool holding element, the material addition device may be attached to the movable tool holding element, and where the movable tool holding element is controlled by a controller of the machine tool, the controller may be used for manipulating the material addition device to add material in a desired area of the workpiece. The material addition device is preferably capable of adding material to the workpiece without inducing electrical currents or fields in the workpiece or in the machine tool. Where the machine tool includes a rotating or nutating spindle unit, the material addition device may be operatively attached to the spindle unit. The machine tool may be a lathe, a grinder, a milling machine, a jig bore, or any other type of machine tool.

According to one aspect of the invention, the material addition device includes a low temperature laser. The material addition device may also include a wire feeder for supplying material to be added to the workpiece, by being melted with a beam from the laser, along with a portion of the workpiece adjacent the wire in the area of the workpiece in which it is desired to add material. The laser may be focused to provide an elongated area of impingement, rather than the point-shaped area of impingement typically used in heating materials with a laser.

A method or apparatus according to the invention may also include provisions for machining the workpiece subsequent to, and/or prior to, adding the material with the material addition device, without removing the workpiece from the machine tool, and/or provisions for scanning or measuring the workpiece prior to adding the material, in order to determine where material needs to be added.

According to another aspect of the invention, the same set-up that is used for machining the workpiece on a machine tool prior or subsequent to adding material with the material addition device, is also used during the process of adding material with the material addition device while the workpiece is mounted on the machine tool, except for replacing machining cutters used during machining operations with the material addition device. The same set-up may also be used for scanning or measuring the workpiece prior to or subsequent to either or both of the machining operations or the addition of material.

The material addition device may add material that is either identical to, or dissimilar from the base material of the workpiece.

Other aspects, objectives and advantages of the invention will become more apparent from the following description of the invention, in conjunction with the accompanying drawings.

### BRIEF DESCRIPTION OF THE DRAWINGS AND ATTACHMENTS

FIG. 1 is a schematic representation of a machining apparatus including a material addition device, according to the invention;

FIG. 2 is an enlarged schematic representation of a portion of the machining apparatus of FIG. 1, with a prior art tool attached to a machine tool of the machining apparatus in place of the material addition device;

FIG. 3 is identical to FIG. 2 in all respects except that a material addition device, according to the invention, is attached to the machine tool instead of the prior art tool shown in FIG.2;

FIG. 4 is a partial cross sectional view of a spindle adapter and a laser adapter, according to the invention; and

FIG. 5 is a schematic representation of the elements and operation of an exemplary embodiment of a material addition device, according to the invention.

While the invention will be described in connection with certain preferred embodiments, there is no intent to limit it to those embodiments. On the contrary, the intent is to cover all alternatives, modifications and equivalents as included within the spirit and scope of the invention. The disclosure provided by all patents or other documents referenced herein or in the attachments is incorporated herein by reference.

### DESCRIPTION OF THE INVENTION

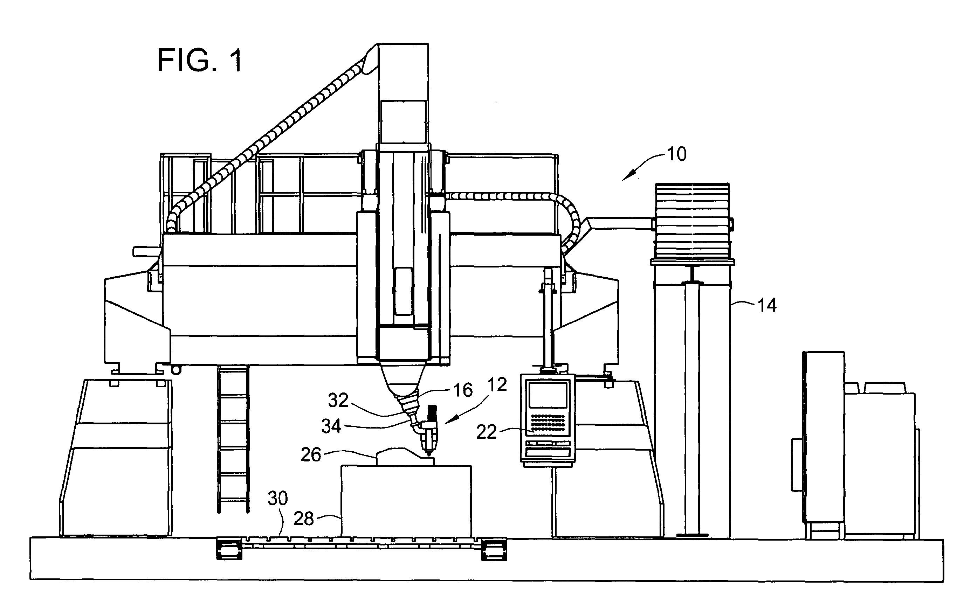

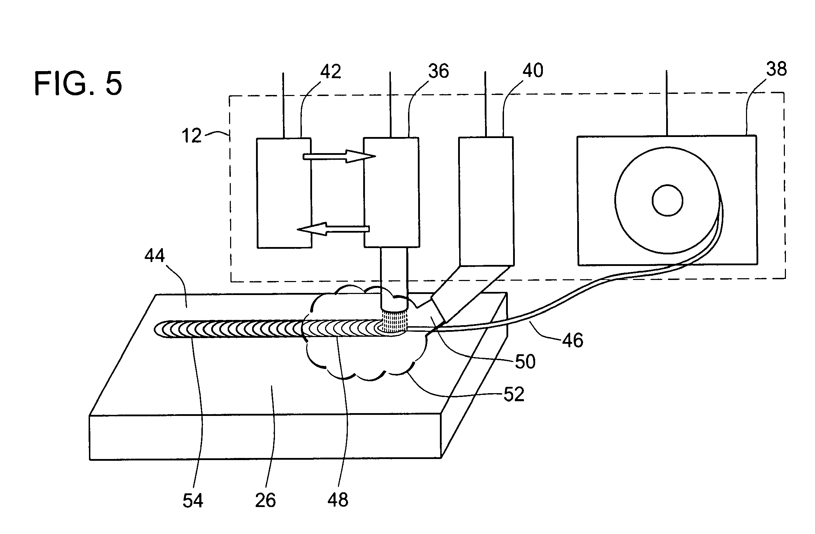

FIG. 1 shows an exemplary embodiment of the invention in the form of a machining apparatus 10 including a material addition device 12 operatively attached to a machine tool 14. As shown in FIG. 5, in the exemplary embodiment, the material addition device 12 includes a wire feeder 38, a laser 36 , and associated cooling and inert gas supplying elements 42, 40, as will be explained in greater detail below.

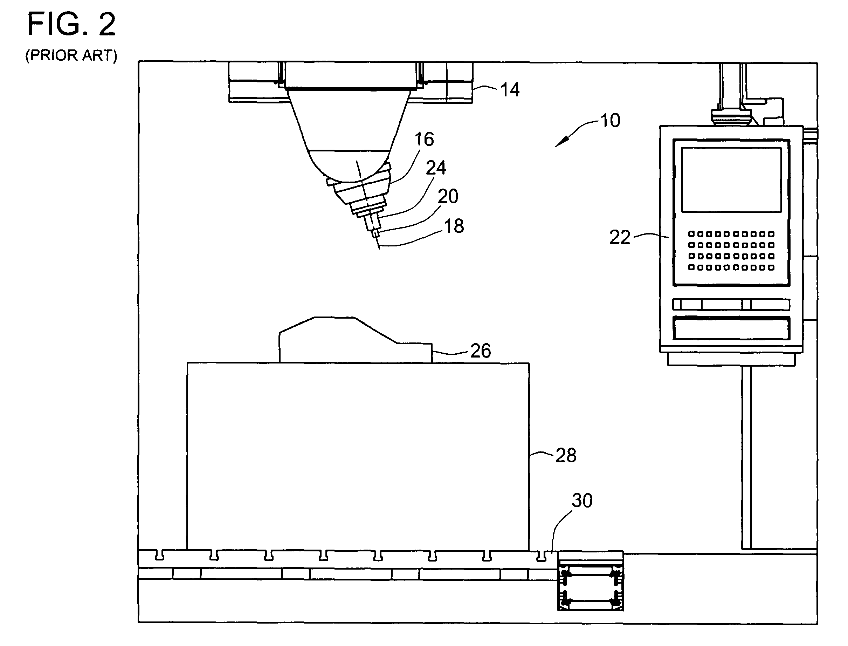

The machine tool 14 in the exemplary embodiment is a high velocity gantry, of the type used in the die and mold industry for machining dies of the type used for forming automotive body panels. As shown in FIGS. 1 and 2, and Attachment 1, the machine tool 14 includes a nutating spindle unit 16 with a built in rotary axis 18 that provides 5-axis contour machining with large diameter face mills or end mills 20, when controlled by a controller 22 of the machine tool 14. The end mill 20 is held in a collet 24 which is adapted for automated insertion into and retention in the spindle unit 16.

A workpiece 26 is mounted on a fixture 28 which is in turn attached to a table 30 of the machine tool 14. With the workpiece 26 mounted in this manner, the controller 22 can operate the machine tool 14 to perform machining operations on the workpiece 26, in a manner known in the art. As part of the machining operations, the collet 24 will typically be stored in a magazine (not shown) holding several tools, as is known in the art, so that various tools can be automatically retrieved and installed on the spindle unit 16 as they are needed for machining operations. Once a tool has been utilized for performing its required operation, it will be automatically removed from the spindle unit and returned to storage in the magazine.

It is also contemplated, in some embodiments of the invention, that the machine tool 14 be adapted to cooperate with and/or manipulate various instruments for performing scanning or measuring operations on the workpiece 26 while it is mounted on the fixture 28 and the fixture 28 is attached to the table 30 of the machine tool 14. It is further contemplated that such scanning or measurement instruments be stored in a magazine in the same manner as the tools used by the machine tool 14.

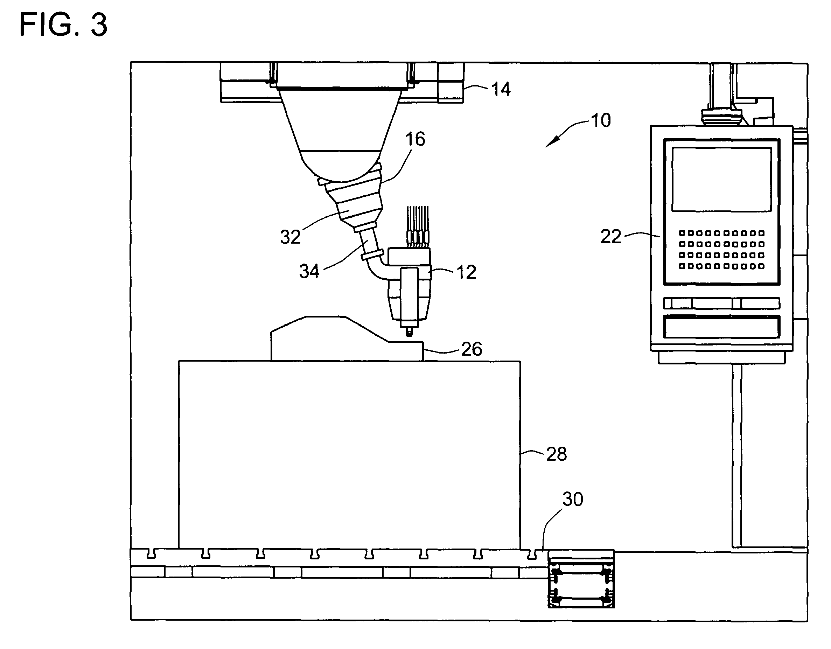

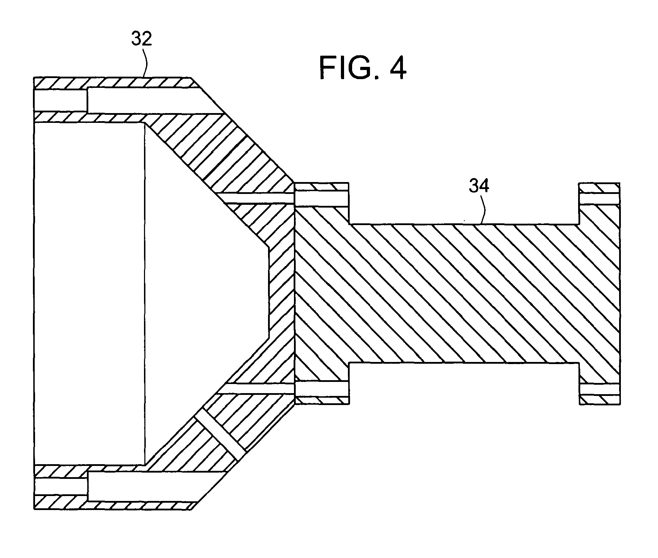

As shown in FIGS. 1, 3 and 4, in the exemplary embodiment of the machining apparatus 10 according to the invention, the material addition device 12 is operatively attached to the nutating spindle unit 16 by a spindle adapter 32 and a laser adapter 34, so that the controller 22 can manipulate the material addition device 12, through movement of the nutating spindle device 16 and the gantry, etc., of the machine tool 14, in much the same manner as the tool 20 is manipulated during machining operations. It is also contemplated, in some embodiments of the invention, that the material addition device 12 is adapted for storage in a magazine in a manner allowing for automatic retrieval of the material addition device 12 from the magazine when it is needed, and for automatic return to the magazine for storage when it is no longer needed, in the same manner as other tools used by the machine tool 14.

The spindle adapter 32 of the exemplary embodiment is bolted to the spindle unit 16, but in other embodiments of the invention, it may be desirable to use other arrangements for attaching the material addition device 12 to the machine tool 14. For example, the spindle adapter 32 can be configured to provide the same interface as the collet 24, so that the material addition device can be attached to the spindle 16 in the same manner as any other tool, without the use of a bolted joint.

As shown in FIG. 5, the material addition device 12 of the exemplary embodiment 10 includes a laser 36, a wire feeding device 38, an inert gas delivery device 40, and a laser cooling unit 42. The laser 36 forms a beam which is preferably focused to form an elongated area of impingement on the workpiece, such as a line or an ellipse, for example, approximately 1/2 inch wide by 1/8 inch long, rather than being focused to a point, so that an area of the surface 44 of the workpiece on either side and along a segment of a wire 46 is heated by the laser 36, simultaneously with the wire 46, to form a puddle 48 of molten material into which the wire 46 is fed and melted to join with the workpiece 26 for adding material to the workpiece 26. The inert gas delivery device 40 provides a stream of inert gas which creates a cloud 52 of inert gas around the puddle 48 to facilitate joining of the melted materials in the manner commonly known in the art. By moving the material addition device 12 with respect to the workpiece 26, or vice versa, using the capabilities of the machine tool 14 and its controller 22, the puddle 48 can be moved along the surface 44 of the workpiece 26 to form a bead 54 of added material on the workpiece 26. By adding multiple beads 54, an area of the surface 44 of the workpiece 26 can be built up with a material that is identical to, or dissimilar from the base material of the workpiece 26.

Once the surface 44 has been sufficiently built up with added material, the material addition device 12 is replaced by an appropriate tool 20, and the machine tool 14 is used for machining the workpiece 26 to a final desired shape, while the workpiece 26 remains mounted on the fixture 28. If necessary, the operations of adding material, measurement, and machining can be repeated, all without ever removing the workpiece 26 from the fixture. In the past, it would have been necessary to remove the workpiece 26 from the machine tool 14, and also possibly from the fixture 28, during material addition operations by processes such as arc welding, thereby necessitating multiple setup operations which are eliminated by the present invention.

Although the invention has been described herein in terms of certain exemplary embodiments, those skilled in the art will readily recognize that many other embodiments can be used in practicing the invention. For example, although the exemplary embodiment used a laser and wire feeder for material addition, in other forms of the invention other types of devices and methods may be used for feeding added material and generating heat for joining the fed material to the workpiece.

In some embodiments of the invention, for example, it may be desirable to add material in the form of a powder. Where a powder is utilized, however, it is contemplated that the puddle of molten material of the workpiece be of a sufficient depth that a homogenous layer of material be formed, when the puddle is cooled, of a depth substantially greater than is achieved through prior processes such as cladding, plasma or arc spraying, or plating, where it is a requirement that the degree of any melting of the surface of the substrate be minimized.

The term "wire" as used herein is to be construed broadly to encompass any form of material fed in a linear fashion, such a rod, a billet, or a strip of non-circular material. In particular, strip-shaped material may be preferable where a laser generates en elongated area of impingement, according to the invention.

It is also contemplated that the wattage of a laser used for material addition, according to the invention will be matched appropriately to the form of the workpiece and the nature of the material addition operation to be performed. For example, for a large workpiece, 2000 to 4000 watts may be required, whereas for a workpiece formed of sheet metal, a lower wattage might be preferred. By judicious choice of operating parameters, such as laser wattage, shape of the area of impingement, shape and form of the added material, and feeds and speeds during application of heat, addition of material, and temperature and flow of the inert gas, the invention allows a workpiece to be substantially built up in a manner that provides higher structural properties with less thermal effect and residual stresses on the workpiece than can be achieved with prior methods and apparatuses.

The invention may also be used for material addition operations on both metallic and non-metallic materials, and for joining materials which are identical or dissimilar. For example, the invention may be used with considerable efficacy for providing a surface layer of stellite onto a steel workpiece. It has been observed that such a surface, produced with a laser in the manner described above, exhibits less porosity than such surfaces provided by more traditional methods. Through judicious selection of various related aspects of the invention, such as the power output of the laser, the rate of cooling of the molten puddle, and the feed rate of the added material, it is contemplated that metals having significantly different melting temperatures, such as steel and aluminum, for example, can be joined through practice of the invention.

The use of the terms "a" and "an" and "the" and similar referents in the context of describing the invention are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any element not expressly described herein as being essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited or suggested herein as permitted by applicable law. Moreover, any combination of the above-described elements in all possible variations thereof is encompassed by the invention unless otherwise indicated herein or otherwise clearly contradicted by context.

## Claims

1. A method for adding material to a workpiece mounted on a machine tool, while the workpiece remains mounted on the machine tool, the method comprising:
melting a portion of the workpiece, in a zone of addition of the workpiece, using a material addition device including a laser, to form a puddle of molten material of the workpiece in the zone of addition; and
feeding the material to be added into the puddle of molten material while continually applying heat with the laser.

2. The method of claim 1, comprising simultaneously melting the added material and the portion of the workpiece in the zone of addition with the laser.

3. The method of claim 2, further comprising, focusing the laser into a line, rather than a point.

4. The method of claim 3, further comprising focusing the laser into an elongated area of impingement having a length of about 1/2 inch in width and about 1/8 inch long.

5. The method of claim 1, further comprising, focusing the laser into an elongated area of impingement, rather than a point.

6. The method of claim 5, further comprising focusing the laser into a elongated area of impingement having a length of about 1/2 inch in width and about 1/8 inch long.

7. The method of claim 1, further comprising, machining the workpiece, without removing the workpiece from the machine tool.

8. The method of claim 1, further comprising, machining the workpiece, without removing the workpiece from the machine tool.

9. The method of claim 8, further comprising, machining the workpiece prior to adding the material.

10. The method of claim 8, further comprising, machining the workpiece, subsequent to adding the material, without removing the workpiece from the machine tool.

11. The method of claim 10, further comprising, machining the workpiece prior to adding the material.

12. The method of claim 1, further comprising, adding material to the workpiece with a material addition device mounted on the machine tool concurrently with the workpiece.

13. An apparatus for adding material to a workpiece mounted on a machine tool, while the workpiece remains mounted on the machine tool, the apparatus comprising:
a material addition device including a laser for melting a portion of the workpiece, in a zone of addition of the workpiece, to form a puddle of molten material of the workpiece in the zone of addition; and
a feeder for feeding the material to be added into the puddle of molten material.

14. The apparatus of claim 13, wherein the feeder comprises a wire feeder.

15. The apparatus of claim 13, wherein the material addition device is mounted on the machine tool concurrently with the workpiece.

16. The apparatus of claim 15, wherein the machine tool includes a tool holding element, and the material addition device is operatively attached to the tool holding element.

17. The apparatus of claim 16, wherein the tool holding element is movable, and the apparatus further includes a controller for manipulating the material addition device to add material in a desired area of the workpiece.

18. The apparatus of claim 1, wherein the machine tool includes a rotating and/or nutating spindle unit, and the material addition device is operatively attached to the spindle unit.

19. The apparatus of claim 1, further including the machine tool.

20. A method for adding material to a workpiece mounted in a set-up of a machine tool for use with machining cutters, while the workpiece remains mounted in the set-up of the machine tool, the method comprising:
melting a portion of the workpiece, in a zone of addition of the workpiece, using a material addition device including a laser, to form a puddle of molten material of the workpiece in the zone of addition; and
feeding the material to be added into the puddle of molten material while continually applying heat with the laser;
the melting and feeding being performed while the workpiece remains mounted in the same set-up that is used for machining the workpiece on the machine tool, except for replacing machining cutters used during machining operations with the material addition device.

21. The apparatus of claim 20, further comprising, machining the workpiece prior or subsequent to adding material with the material addition device, while the workpiece remains mounted in the set-up.

22. The method of claim 21, further comprising, scanning or measuring the workpiece prior to or subsequent to either or both of the machining operations and/or the addition of material, while the workpiece remains mounted in the same set-up used for machining the workpiece on the machine tool and adding material to the workpiece.

23. A method for adding material to a workpiece, while the workpiece is mounted on a machine tool, comprising, melting a portion of the workpiece, in a zone of addition of the workpiece, to form a puddle of molten material of the workpiece in the zone of addition, and feeding the material to be added into the puddle of molten material while continually applying heat to the zone of addition.
